# EUROPÄISCHE PATENTSCHRIFT

(11) **EP 2 216 566 B1**
(45) Veröffentlichungstag und Bekanntmachung des Hinweises auf die Patenterteilung: **04.06.2014**
(21) Anmeldenummer: 10164287.4
(22) Anmeldetag: 16.07.2004
(51) Int. Cl.: F16H 57/039, B29C 45/16, B60N 2/06

(54) **Verfahren zur Montage eines Verstellgetriebes**
Method of mounting of an adjusting mechanism
Procédé de montage d' un mécanisme de réglage

(30) Priorität: 08.08.2003 DE 10337475
(43) Veröffentlichungstag der Anmeldung: 11.08.2010
(62) Teilanmeldung aus: 04762419.2
(73) Patentinhaber: Brose Fahrzeugteile GmbH & Co. KG, Coburg, 96450 Coburg (DE)
(72) Erfinder: Hoffmann, Matthias, 8712 Stäfa (CH); Bauersachs, Andrea, 96237, Ebersdorf (DE); Prause, Andreas, 96450, Coburg (DE)
(74) Vertreter: Schröder, Christoph

(56) Entgegenhaltungen:
- DE-A1- 19 815 283
- US-A- 5 222 402
- US-A- 5 893 959
- HABERSTROH E: "LASERSCHWEISSEN IN DER MIKROTECHNIK WENIG ENERGIE HOHE FESTIGKEIT", PLASTVERARBEITER, HUETHIG GMBH, HEIDELBERG, DE, Bd. 51, Nr. 9, 1. September 2000 (2000-09-01), Seite 60,62, XP000951390, ISSN: 0032-1338

## Beschreibung

Die Erfindung betrifft ein Verstellgetriebe für ein Kraftfahrzeug nach dem Oberbegriff des Anspruchs 1.

Ein derartiges Verstellgetriebe dient zur Einstellung eines Verstellteiles in einem Kraftfahrzeug, insbesondere eines Sitzteiles, und umfasst eine (um ihre Längsachse drehbare) Spindelmutter, die einerseits eine Innenverzahnung aufweist, über die sie mit einer (vorzugsweise feststehenden, d.h. drehfest gelagerten) Spindel zusammenwirkt, und die andererseits eine Außenverzahnung aufweist, über die sie mit einem weiteren Getriebeelement, insbesondere einer Antriebsschnecke, in Eingriff steht. Die Außenverzahnung der Spindelmutter erstreckt sich dabei auf deren äußerer Oberfläche (Umfangsfläche).

Gemäss einer bevorzugten Anwendung kann dieses Getriebe dazu dienen, ein Sitzteil relativ zu einem anderen Sitzteil zu verschieben, beispielsweise eine erste Schiene einer Schienenlängsführung, an der ein in Sitzlängsrichtung verstellbarer Kraftfahrzeugsitz befestigt ist, relativ zu einer zweiten Schiene der Schienenlängsführung, die an einer Bodenbaugruppe des entsprechenden Kraftfahrzeuges zu befestigen ist, zu verschieben. Dabei wird die feststehende Spindel an einem der relativ zueinander verstellbaren Kraftfahrzeugteile befestigt und die Spindelmutter zusammen mit dem weiteren Getriebeelement sowie einer zugeordneten Antriebsvorrichtung (z.B. einem Antriebsmotor) an dem anderen Kraftfahrzeugteil angeordnet. Wird bei einer solchen Anordnung die Spindelmutter mittels der durch die Antriebsvorrichtung antreibbaren Antriebsschnecke gedreht, so bewegt sie sich hierbei in Längsrichtung entlang der feststehenden Spindel, was zu der gewünschten Relativbewegung der beiden Fahrzeugteile führt.

Derartige Verstellgetriebe werden in Kraftfahrzeugen in zunehmend großer Zahl benötigt, um Sitzteile und andere Fahrzeugteile, wie z. B. eine türseitige Armlehne, eine Mittelkonsole usw., in ihrer Lage einstellen und damit an die Bedürfnisse jeweils anderer Fahrzeuginsassen anpassen zu können.

Aus der gattungsgemäßen US 5,222,402 ist ein Verstellgetriebe bekannt, bei dem Gehäusehälften beispielsweise unter Verwendung eines Wärmeschweißverfahren ("heat welding") aneinander gefügt werden.

Aus Haberstroh, "Laserschweißen in der Mikrotechnik", PLASTVERARBEITER 51. Jahrg (2000), Nr. 9, S. 60 bis 62) ist ein Laserschweißverfahren bekannt, bei dem ein Laserstrahl beispielsweise senkrecht auf einen Spalt zwischen zu fügende Bauteile gerichtet wird und die Bauteile über eine Spannvorrichtung gegeneinander vorgespannt werden. Dabei wirkt eine Einrichtung zum Aufbringen einer Schweißkraft auf einen Stößel ein, der unmittelbar, starr auf eines der zu fügenden Bauteile einwirkt.

Der Erfindung liegt das Problem zugrunde, ein Verfahren zur Montage eines Verstellgetriebes der eingangs genannten Art zu schaffen, das bei kompaktem Aufbau unter Verwendung möglichst leichter Materialien zugleich eine große Stabilität aufweist.

Bei einem Verstellgetriebe wird die Außenverzahnung der Spindelmutter durch radial (bezüglich der Achse der Spindelmutter) nach innen weisende Vertiefungen der äußeren Oberfläche der Spindelmutter gebildet, deren Zahntiefe zu mindestens einem axialen Ende der Spindelmutter hin abnimmt, insbesondere besonders vorteilhaft gegen Null geht.

Hierdurch wird eine erhöhte Stabilität der Spindelmutter erreicht. Dies ist insbesondere deswegen von besonderer Bedeutung, da an einem Verstellgetriebe eines Kraftfahrzeugs, insbesondere bei der Verwendung dieses Verstellgetriebes zur Einstellung eines Sitzteiles, in einem Crash-Fall erhebliche Kräfte auftreten können, die jedoch nicht zu einem Durchrutschen der Spindelmutter auf der zugeordneten Spindel führen dürfen. Insbesondere werden durch die Außenverzahnung verursachte Kerbspannungseffekte verhindert, die in einem Crash-Fall zu einem erhöhten Bruchrisiko führten. Vorteilhaft ist dabei eine kontinuierliche Abnahme der Zahntiefe in axialer Richtung von einem mittleren Bereich der Verzahnung hin zu einem axialen Ende der Spindelmutter. Grundsätzlich ist jedoch auch eine im Wesentlichen sprunghafte Änderung der Zahntiefe zu einem axialen Ende hin möglich.

In beiden Fällen ist bevorzugt vorgesehen, dass sich die Außenverzahnung der Spindelmutter in axialer Richtung nur über einen Teil der axialen Ausdehnung der äußeren Oberfläche der Spindelmutter erstreckt, indem die Spindelmutter in axialer Richtung jenseits der Außenverzahnung mindestens einen, nicht mit einer Außenverzahnung versehenen, ringartigen (insbesondere zylindrischen) Endabschnitt (mit einem definierten Durchmesser) aufweist. In diesem Fall geht die Außenverzahnung der Spindelmutter in dem mindestens einen axialen Endabschnitt, zu dessen axialem Ende hin ihre Zahntiefe abnimmt, axial in einen Abschnitt der Spindelmutter über, der keine Außenverzahnung aufweist, also frei von Verzahnungsbereichen ist. Dieser Endabschnitt kann so dünn ausgestaltet sein, dass er im Wesentlichen eine Linie (mit minimaler Ausdehnung in axialer Richtung) bildet, die sich kreisringförmig entlang der äußeren Oberfläche der Spindelmutter erstreckt.

Soweit die Spindelmutter nur einen nicht mit einer Außenverzahnung versehenen axialen Endabschnitt aufweist, schließt sich dieser bevorzugt (in axialer Richtung) an dasjenige Ende der Außenverzahnung an, an dem in einem typischen Crash-Fall die höchste mechanische Belastung zu erwarten ist.

In einer konkreten Ausführungsform ist die Spindelmutter an ihren axialen Endabschnitten (beidseits der Außenverzahnung) jeweils ohne Verzahnung ausgebildet lund bildet dort eine Zylinderfläche mit einem definierten Durchmesser. Zwischen diesen beiden Endabschnitten der Spindelmutter erstreckt sich die Außerverzahnung, die durch radial nach innen weisende Vertiefungen - bezogen auf den Durchmesser der verzahnungsfreien Endabschnitte - gebildet ist.

Bevorzugt ragt die Außenverzahnung in radialer Richtung betrachtet nicht über den mindestens einen verzahnungsfreien Endabschnitt der Spindelmutter hinaus. Mit anderen Worten ausgedrückt ist der maximale radiale Abstand der Außenverzahnung von der Längsachse (Mittel- bzw. Drehachse) der Spindelmutter kleiner oder allenfalls gleich dem Radius des mindestens einen verzahnungsfreien Endabschnittes der Spindelmutter.

Zur Vergrößerung des Abstützdurchmessers beim Zusammenwirken mit dem weiteren Getriebeelement ist die Außenverzahnung der Spindelmutter vorzugsweise einer Schneckenradverzahnung angenähert, also im wesentlichen als Globoidverzahnung ausgebildet. Dabei ist jedoch - in axialer Richtung der Spindelmutter betrachtet - im mittleren Bereich der Verzahnung ein zylindrischer Anteil im Zahnverlauf beispielsweise mit einem Evolventenprofil ausgeführt, um die Toleranzlage des weiteren Getriebeelementes (insbesondere in Form einer Schnecke) axial zur Spindelmutter zu erweitern und hierdurch Geräuschprobleme zu vermeiden.

Die Außenverzahnung der Spindelmutter ist also insbesondere an ihren axialen Rändern globoidartig ausgebildet. Sie weist einen stetigen Übergang vom zylindrischen Anteil in die verzahnungsfreien axialen Endabschnitte der Spindelmutter auf. Dieser stetige Übergang vom zylindrischen Anteil der Außenverzahnung zu dem jeweiligen verzahnungsfreien axialen Endabschnitt wird durch eine stetige (kontinuierliche) Verringerung der Verzahnungshöhe in radialer Richtung erreicht.
Die vorbeschriebenen Maßnahmen, die bei einer vorgegebenen, möglichst kompakten Ausführung der Spindelmutter zugleich eine besondere Stabilität sicherstellen, erlauben insbesondere die Herstellung der Spindelmutter (durch Spritzgießen) aus Kunststoff, z. B. PA, POM oder PEEK.

Um die Tragfähigkeit der Innenverzahnung (in Form eines Innengewindes) der Spindelmutter zu erhöhen, erstreckt sich diese in axialer Richtung über eine größere Länge als die Außenverzahnung. Die Innenverzahnung erstreckt sich dabei vorzugsweise in die beiden (an ihrem äußeren Umfang unverzahnten) Endabschnitte der Spindelmutter hinein.

Die Tragfähigkeit der Innenverzahnung (in Form eines Innengewindes) der Spindelmutter wird dadurch erhöht, dass die Zahndicke der Zahnelemente der Innenverzahnung größer ist als die Lückenweite der Innenverzahnung, und zwar vorzugsweise doppelt so groß oder sogar mehr als doppelt so groß. Der Begriff "Verzahnung" wird dabei vorliegend in einer allgemeinen Bedeutung verstanden, so dass der Begriff "Innenverzahnung" der Spindelmutter insbesondere ein Innengewinde umfasst, über das die Spindelmutter mit einer Spindel zusammenwirkt.

Die Spindelmutter und das mit deren Außenverzahnung zusammenwirkende weitere Getriebeelement, insbesondere in Form einer Schnecke, sind vorzugsweise in einem Getriebegehäuse angeordnet, das aus mittels Steckverbindungen zusammensteckbaren Platten besteht, und zwar vorzugsweise aus zwei Paaren einander jeweils gegenüberliegender Gehäuseteile, insbesondere in Form von Platten. Hierbei sind gemäß einer Vorzugsvariante zwei im Querschnitt U-förmige Gehäuseplatten vorgesehen, an deren beiden Stirnseiten (gebildet jeweils durch die Schenkel der im Querschnitt U-förmigen Gehäuseplatten) zusätzliche Gehäuseelemente, insbesondere in Form von Lagerplatten, angeordnet sind, die der Lagerung der beiden axialen Enden der Spindelmutter dienen. Diese kann hierzu an ihren axialen Enden jeweils mit einem Lagerbund versehen sein. Alternativ können auch die beiden Endabschnitte der Spindelmutter unmittelbar zur Lagerung der Spindelmutter in dem Getriebegehäuse dienen. Im letztgenannten Fall können die zusätzlichen Lagerplatten des Getriebegehäuses entfallen und die beiden U-förmigen Gehäuseplatten unmittelbar zur Lagerung der Spindelmutter verwendet werden.

Für eine Leichtbauweise des Verstellgetriebes ist auch das Getriebegehäuses aus Kunststoff hergestellt, wobei der für die Lagerplatten verwendete Kunststoff zur Optimierung der Reibpaarung auf den für den Lagerbund der Spindelmutter verwendeten Kunststoff abgestimmt ist. Ferner wird für die stirnseitigen Lagerstellen (Lagerplatten) oder das Gehäuse insgesamt bevorzugt ein wärmeableitender Kunststoff oder metallischer Werkstoff verwendet.

Die in den Lagerplatten vorgesehenen Lageröffnungen für die Spindelmutter weisen z.B. jeweils einen von der jeweiligen Lagerplatte abstehenden Rand auf, um die Lagerfläche zu vergrößern. Dieser wird zur Stabilisierung von den beiden U-förmigen Gehäusehälften des Getriebegehäuses umgriffen.

In einer bevorzugten Weiterbildung weist das Getriebegehäuse in mindestens einer seitlichen Begrenzungswand eine Aussparung auf, in die die Spindelmutter oder das mit deren Außerverzahnung zusammenwirkende weitere Getriebeelement radial eingreift. Bei dieser Aussparung kann es sich einerseits um eine (fensterartige) Öffnung in der entsprechenden Begrenzungswand oder auch nur um eine Einbuchtung handeln. Dabei sind der Spindelmutter bevorzugt zwei Aussparungen in einander gegenüberliegenden Begrenzungswänden zugeordnet und dem weiteren Getriebeelement eine Aussparung auf der der Spindelmutter gegenüberliegenden Seite.

Wichtig ist, dass diese Aussparungen radial bezüglich des jeweiligen Getriebeelementes (Spindelmutter oder Schnecke) angeordnet sind, also in radialer Richtung von der Drehachse des jeweiligen Getriebeelementes (Spindelmutter oder Schnecke) beabstandet sind. Es handelt sich also nicht um Lageröffnungen, in die die Getriebeelemente axial eingreifen, sondern um Aussparungen, in die die Getriebeelemente mit ihren Verzahnungsbereichen radial hineinragen, ohne dort gelagert zu sein. Hierdurch wird der für das Verstellgetriebe erforderliche Bauraum weiter minimiert. Bei der Ausgestaltung der Aussparungen als Öffnungen in der jeweiligen Begrenzungswand kann zudem noch die Geräuschentwicklung im Betrieb durch Vermeidung von Resonanz reduziert werden.

An den Gehäuseplatten können weiterhin federnde Elemente angeordnet sein, die bei Verwendung einer Mehrkomponenten-Spritzgusstechnik aus einem anderen Kunststoff bestehen können als die Gehäuseplatten selbst, um eine akustische Entkopplung zwischen dem Getriebegehäuse und dem zugeordneten Fahrzeugteil zu erzielen.

Bei geeigneter Gleitpaarung hinsichtlich der Lagerung der Spindelmutter am Getriebegehäuse können Anlaufscheiben zur Lagerung der Spindelmutter ganz entfallen. Gegebenenfalls werden bevorzugt Stahlscheiben als Anlaufscheiben eingesetzt, die sich durch eine gute Wärmeabfuhr und einen niedrigen Reibwert auszeichnen.

Ferner kann aus Gründen der Stabilisierung der Spindelmutter auf einem oder jedem Lagerbund, der axial an einen jeweiligen axialen Endabschnitt der Spindelmutter anschließt, eine vorzugsweise aus Metall, insbesondere Stahl, bestehende Scheibe bzw. ein Armierungsring vorgesehen sein. Die Scheibe bzw. der Armierungsring weist hierzu einen möglichst großen Durchmesser auf, der beispielsweise mit dem Durchmesser der mit der Außenverzahnung versehenen äußeren Oberfläche der Spindelmutter übereinstimmen kann. Dieses Element kann dann gleichzeitig als Anlaufscheibe dienen, auch mit dem Ziel der Geräuschreduzierung.

Ferner kann an der Spindelverzahnung, der die Spindelmutter durchgreifenden Gewindespindel ein Schneidring ausgebildet sein.

Gemäß einer bevorzugten Weiterbildung werden die Gehäuseplatten, insbesondere im Bereich ihrer Steckverbindungen, (zusätzlich) durch Schweißen, insbesondere Ultraschall- oder Laserschweißen, miteinander verbunden. Hierbei ist das Material der äußeren, U-förmigen Gehäuseplatten vorzugsweise für die zum Schweißen verwendete Laserstrahlung transparent und das Material der inneren Lagerplatten des Getriebegehäuses (z. B. durch Zugabe von Ruß) nicht-transparent im Hinblick auf die Laserstrahlung ausgeführt, so dass durch teilweises Aufschmelzen der inneren Lagerplatten eine Verbindung mit den äußeren, U-förmigen Gehäuseplatten herstellbar ist.

Das Getriebegehäuse wird bevorzugt in einer im Querschnitt U-förmigen Halterung aufgenommen, von deren Schenkeln Befestigungsflansche abstehen, die zur Befestigung der Halterung (zusammen mit dem Getriebegehäuse) an dem zugeordneten Fahrzeugteil, z. B. einer Sitzschiene, dienen.

Die seitlichen Schenkel der Halterung weisen Durchgangsöffnungen für die mit der Spindelmutter zusammenwirkende Gewindespindel auf, und der Haltewinkel ist bevorzugt derart biegeelastisch ausgebildet, dass in einem Crash-Fall die seitlichen Schenkel durch Verbiegen im Bereich ihrer Durchgangsöffnungen mit der Spindelverzahnung in Eingriff geraten und verhaken.

Ein Verfahren zur Herstellung eines Verstellgetriebes mit einer aus Kunststoff bestehenden Spindelmutter und einem aus Kunststoff bestehenden Getriebegehäuse, das Lagerplatten für die Spindelmutter umfasst, ist dadurch charakterisiert, dass die Spindelmutter und zumindest die Lagerplatten durch Spritzgießen in ein und demselben Werkzeug (in einem mehrstufigen Spritzgussverfahren) hergestellt werden, und zwar vorzugsweise nacheinander in zwei aufeinander folgenden Einspritzvorgängen. Hierdurch ist die Spindelmutter nach Abschluss des Spritzgussprozesses bereits in den zugeordneten Lagerstellen der Lagerplatten des Getriebegehäuses gelagert. Es ist dann nicht mehr erforderlich, die Spindelmutter nachträglich in die entsprechenden Lagerstellen (insbesondere Lageröffnungen) einzuführen.

Anschließend wird gemäß einer Variante des Verfahrens das weitere Getriebeelement (also insbesondere eine Schnecke) in das Werkzeug eingelegt und es werden sodann in demselben Spritzgusswerkzeug auch die beiden U-förmigen Gehäusehälften des Getriebegehäuses hergestellt.

Alternativ kann die Schnecke jedoch auch nach der Herstellung der Spindelmutter und des Getriebegehäuses in einem Spritzgusswerkzeug nachträglich in das Gehäuse eingeklippst werden.

Bei dem gemeinsamen Spritzgießen sämtlicher Gehäuseplatten in einem Spritzgusswerkzeug werden die Gehäuseplatten schon bei der Herstellung selbst miteinander verbunden, so dass kein nachträgliches Zusammenstecken der Gehäuseplatten mehr erforderlich ist.

Alternativ können jedoch die einzelnen Gehäuseplatten auch separat hergestellt und anschließend zusammengesteckt werden. Die Steckverbindungen werden dann durch Umformen, Kleben oder thermische Verfahren wie Laserschweißen, Ultraschallschweißen oder Heißverstemmen aneinander fixiert.

Sofern die Gehäuseplatten des Getriebegehäuses, insbesondere im Bereich der Steckverbindungen, durch Laserschweißen miteinander verbunden werden, wird vor oder während des Schweißprozesses axiales Lagerspiel zwischen den inneren Gehäuseplatten (Lagerplatten) des Getriebegehäuses und der Spindelmutter beseitigt (herausgedrückt). Hierzu wird eine definierte, axial wirkende Kraft auf die inneren Gehäuseplatten (Lagerplatten) aufgebracht; anschließend werden diejenigen Bereiche der inneren Gehäuseplatten (Lagerplatten) durch Laser angeschmolzen, die der Bildung einer Steckverbindung mit den äußeren U-förmigen Gehäuseplatten dienen, wobei der Schweißprozess abgeschlossen wird, wenn eine geeignete Kraft-Weg-Messung anzeigt, dass die inneren Lagerplatten an den entsprechenden Endabschnitten der Spindelmutter anliegen.

Um einen derartigen axialen Spielausgleich zu ermöglichen, sind die Steckverbindungen zwischen den inneren Lagerplatten und den äußeren U-förmigen Gehäuseplatten mit axialem Spiel ausgeführt. Beim Laserschweißen der Lagerplatten entsteht eine Schmelze, die die spielbedingten Spalte ausfüllt und sich mit der Oberfläche der anderen, U-förmigen äußeren Gehäuseplatte verbindet.

Die Erfindung betrifft ein Verfahren zur Montage eines in einem Getriebegehäuse angeordneten Verstellgetriebes für ein Kraftfahrzeug, bei dessen Durchführung mindestens ein Gehäuseteil des Getriebegehäuses mit einer weiteren Gehäusebaugruppe in Eingriff gebracht wird und das Gehäuseteil an der weiteren Gehäusebaugruppe festgelegt wird, indem im Eingriffsbereich des Gehäuseteiles mit der weiteren Gehäusebaugruppe Material angeschmolzen wird. Nach Beendigung der zum Anschmelzen dienenden Erwärmung des Eingriffsbereiches sowie einer anschließenden Abkühlung des Eingriffsbereiches ist dann das entsprechende Gehäuseteil mit der zugeordneten weiteren Gehäusebaugruppe nach Art einer Schweißverbindung verbunden. Die genannten Elemente der Getriebegehäuses bestehen dabei bevorzugt aus Kunststoff.

Dieses Verfahren soll in der Weise ausgestaltet sein, dass unter Berücksichtigung des stets vorhandenen Fertigungs- und Montagespiels eine möglichst definierte Verbindung zwischen der Gehäuseplatte und der zugeordneten weiteren Gehäusebaugruppe erreicht wird, sowie Spiel im Verstellgetriebe und in den Lagerstellen des Verstellgetriebes in dem Getriebegehäuse reduziert wird.

Hierzu ist vorgesehen, dass das Gehäuseteil und die Gehäusebaugruppe beim Anschmelzen des Materials im Eingriffsbereich elastisch zueinander verspannt sind. Dies entspricht einem Schweißprozess unter Wirkung einer äußeren Vorspannung.

Unter der Wirkung der (von außen aufgebrachten) Vorspannung kann während des Anschmelzens eine Setzbewegung stattfinden, in der sich das Gehäuseteil und die zugeordnete weitere Baugruppe unter der Wirkung der Vorspannkräfte derart (in Vorspannrichtung) zueinander bewegen, dass ein eventuell vorhandenes Spiel im Verstellgetriebe und/oder Getriebegehäuse möglichst ausgeglichen wird und das Gehäuseteil schließlich definiert an der zugeordneten weiteren Gehäusebaugruppe anliegt.

Hierzu greift an dem mindestens einen Gehäuseteil und/oder an der weiteren Gehäusebaugruppe eine Spannvorrichtung an, um das Gehäuseteil und die weitere Gehäusebaugruppe zueinander zu verspannen. (Indem die Gehäuseplatte mittels einer zugeordneten Spannvorrichtung mit einer definierten Vorspannkraft beaufschlagt wird und die weitere Gehäusebaugruppe z.B. räumlich fixiert wird, steht indirekt die weitere Gehäusebaugruppe unter Vorspannung.)

Um hierbei unter Berücksichtigung der Relativbewegung des Gehäuseteiles und der weiteren Gehäusebaugruppe die Spannkräfte möglichst konstant zu halten, wirkt die Spannvorrichtung unter Zwischenschaltung eines elastischen Elementes, insbesondere in Form einer Druckfeder, auf das zugeordnete Element des Gehäuses ein.

Zur Bildung eines Eingriffsbereiches werden das mindestens eine Gehäuseteil und die weitere Gehäusebaugruppe bevorzugt entlang einer Montageachse miteinander in Eingriff gebracht, und zwar vorzugsweise durch Zusammenstecken, so dass der Eingriffsbereich durch einen Steckbereich gebildet wird.

Die Verspannung des mindestens einen Gehäuseteiles und der zugeordneten Gehäusebaugruppe kann einerseits entlang der Montageachse erfolgen oder andererseits auch mit einer Kraftkomponente quer zur Montageachse, insbesondere auch insgesamt senkrecht zur Montageachse.

Als weitere Gehäusebaugruppe kann gemäß einer Ausführungsform der Erfindung ein zweites Gehäuseteil dienen, wobei die beiden Gehäuseteile durch Anschmelzen im Eingriffsbereich unmittelbar aneinander festgelegt werden.

Nach einer anderen Ausführungsform der Erfindung ist die weitere Gehäusebaugruppe zwischen einem ersten und einem zweiten Gehäuseteil aufgenommen, wobei die beiden Gehäuseteile mit jeweils einer Stirnseite der Gehäusebaugruppe in Eingriff gebracht und an der jeweils zugeordneten Stirnseite festgelegt werden, indem im Eingriffsbereich des jeweiligen Gehäuseteiles mit der zugeordneten Stirnseite der Gehäusebaugruppe Material des Gehäuseteiles und/oder der Gehäusebaugruppe angeschmolzen wird. Das Aufbringen von Spannkräften erfolgt bei dieser Ausführungsform der Erfindung bevorzugt in der Weise, dass die beiden Gehäuseteile zueinander verspannt werden, wodurch mindestens eines der Gehäuseteile gleichzeitig auch bezüglich der weiteren Gehäusebaugruppe verspannt wird.

Auch bei dieser speziellen Ausführungsform kann das Verspannen des mindestens einen Gehäuseteiles bezüglich der zugeordneten weiteren Gehäusebaugruppe in Richtung der Montageachse erfolgen oder entlang einer Richtung erfolgen, die eine Komponente senkrecht zur Montageachse aufweist, oder entlang einer Richtung erfolgen, die insgesamt senkrecht zur Montageachse orientiert ist.

Die weitere Gehäusebaugruppe kann dabei wiederum durch zwei Gehäuseelemente gebildet werden, die einander gegenüberliegen, und zwar senkrecht zu der Richtung, entlang der die beiden vorerwähnten Gehäuseteile einander gegenüberliegen.

Als Gehäuseteile und Gehäuseelemente, die bevorzugt aus Kunststoff bestehen, eignen sich insbesondere Gehäuseplatten.

Zum Anschmelzen des Materials im Eingriffsbereich des mindestens einen Gehäuseteiles mit der zugeordneten Gehäusebaugruppe kann ein Laser verwendet werden, mit dem ein Laserschweißprozess bewirkt wird.

Nicht anzuschmelzende Bereiche des Gehäuses, die während des Schweißprozesses der Laserstrahlung ausgesetzt sind, bestehen dabei bevorzugt aus einem für die verwendete Laserstrahlung durchlässigen Material, während die anzuschmelzenden Bereiche aus einem die verwendete Laserstrahlung absorbierenden Material bestehen.

Der Anschmelz- bzw. Schweißvorgang wird in Abhängigkeit von mindestens einem vorgebbaren Kriterium derart gesteuert, dass möglichst zuverlässig eine Verbindung zwischen dem Gehäuseteil und der weiteren Gehäusebaugruppe mit bestimmten, gewünschten Eigenschaften erzielt wird.

Hierzu kann die Dauer des Anschmelz- bzw. Schweißvorganges in Abhängigkeit von der Setzbewegung des mindestens einen Gehäuseteiles gesteuert werden, und zwar beispielsweise in Abhängigkeit von der Geschwindigkeit und/oder der Dynamik der Setzbewegung, so dass definierte Änderungen in der Geschwindigkeit der Setzbewegung oder definierte Änderungen der Reaktionskraft beim Verspannen des mindestens einen Gehäuseteiles bezüglich der weiteren Baugruppe als Kriterium herangezogen werden, dass der Anschmelz- bzw. Schweißvorgang beendet werden kann, weil das gewünschte Ergebnis erzielt ist. So können beispielsweise eine starke Abnahme der Geschwindigkeit der Setzbewegung oder ein starker Anstieg der Reaktionskraft beim Verspannen des mindestens einen Gehäuseteiles bezüglich der weiteren Gehäusebaugruppe darauf hindeuten, dass die angestrebte Setzbewegung zu einem spielfreien, definierten Anliegen des mindestens einen Gehäuseteiles an der zugeordneten Gehäusebaugruppe geführt hat.

Andererseits kann die Dauer des Anschmelzvorganges auch in Abhängigkeit von dem Ausmaß (Umfang) der Setzbewegung gesteuert werden, so dass der Anschmelzvorgang beendet wird, wenn bei der Setzbewegung des mindestens einen Gehäuseteiles relativ zu der weiteren Gehäusebaugruppe ein bestimmter, vorgebbarer Weg zurückgelegt worden ist. Diese Variante ist insbesondere dann vorteilhaft, wenn der Eingriffsbereich des mindestens einen Gehäuseteiles mit der zugeordneten weiteren Gehäusebaugruppe durch einen Steckbereich gebildet wird und dabei einer der beiden im Steckbereich zu verbindenden Steckabschnitte ein derartiges Übermaß aufweist, dass das mindestens eine Gehäuseteil und die zugeordnete weitere Gehäusebaugruppe erst dann definiert, spielfrei aneinander anliegen, wenn nach dem Anschmelzen des mit Übermaß gefertigten Steckabschnittes eine Setzbewegung der Gehäuseplatte bezüglich der zugeordneten weiteren Gehäusebaugruppe mit einem bestimmten Umfang, also einem bestimmten Mindestweg, erfolgt ist.

Andererseits kann aufgrund von Erfahrungswerten die Dauer des Anschmelz- bzw. Schweißvorganges auch von Anfang an festgelegt sein.

In dem Eingriffsbereich (Steckbereich) des mindestens einen Gehäuseteiles mit der weiteren Gehäusebaugruppe ist bevorzugt ein Freiraum vorgesehen, in den beim Anschmelzen des Materials gebildetes Schmelzgut einfließen kann.

Ferner kann die Qualität der Verbindung zwischen dem mindestens einen Gehäuseteil und der weiteren Gehäusebaugruppe, insbesondere hinsichtlich der Frage, ob diese beiden Gehäusekomponenten, wie gewünscht, definiert zueinander liegen, ebenfalls anhand des Ausmaßes der Bewegung des mindestens einen Gehäuseteiles bezüglich der zugeordneten weiteren Gehäusebaugruppe während des Anschmelzvorganges überprüft werden. Soweit im als Steckbereich ausgebildeten Eingriffsbereich des Gehäuseteiles mit der zugeordneten Gehäusebaugruppe ein Steckabschnitt bewusst mit einem definierten Übermaß gefertigt ist, muss die Setzbewegung zumindest einen Umfang erreicht haben, der dem gewählten Übermaß entspricht, damit eine definierte, Anlage der Gehäusekomponenten erreicht wird. Um dies sicherzustellen, kann vorgesehen sein, dass die Leistung des zum Anschmelzen verwendeten Lasers derart gesteuert wird, dass das Erreichen einer definierten Setzbewegung sichergestellt ist.

Weitere Merkmale und Vorteile der Erfindung werden bei der nachfolgenden Beschreibung von Ausführungsbeispielen anhand der Figuren deutlich werden.

Es zeigen:
- Fig. 1a: eine Explosionsdarstellung eines Verstellgetriebes für ein Kraftfahrzeug mit einem Getriebegehäuse;
- Fig. 1b: das Verstellgetriebe aus Fig. 1a im zusammengebauten Zustand;
- Fig. 1c: das Verstellgetriebe aus Fig. 1a im zusammengebauten Zustand, teilweise aufgebrochen;
- Fig. 2: das Verstellgetriebe aus den Fig. 1a bis 1c mit einem zusätzlichen Getriebeelement in Form einer Spindel und mit einer Halterung;
- Fig. 3: eine bevorzugte Ausbildung der ineinander greifenden Gewinde der Spindel aus Fig. 2 einerseits und der Spindelmutter des Verstellgetriebes andererseits;
- Fig. 4a: eine Spannvorrichtung beim Einwirken auf eine Gehäuseplatte des Getriebegehäuses aus den Figuren 1a bis 1c während der Herstellung einer Verbindung dieser Gehäuseplatte mit weiteren Lagerplatten des Gehäuses durch Laserschweißen;
- Fig. 4b: ein Kraft-Weg-Diagramm zur Illustration der während des Schweißvorganges an der Spannvorrichtung wirkenden Reaktionskräfte;
- Fig. 5: eine perspektivische Darstellung einer Lagerplatte des Getriebegehäuses aus den Figuren 1a bis 1c;
- Fig. 6a: eine schematische Darstellung des Eingriffsbereiches einer Gehäuseplatte in eine zugeordnete Lagerplatte des Getriebegehäuses aus den Figuren 1a bis 1c vor dem Laserschweißen;
- Fig. 6b: eine schematische Darstellung des Eingriffsbereiches einer Lagerplatte in eine Gehäuseplatte des Getriebegehäuses aus den Figuren 1a bis 1c nach dem Laserschweißen;
- Fig. 7: eine Abwandlung des zur Bildung eines Eingriffsbereiches vorgesehenen Steckabschnittes der Lagerplatte aus den Figuren 6a und 6b.

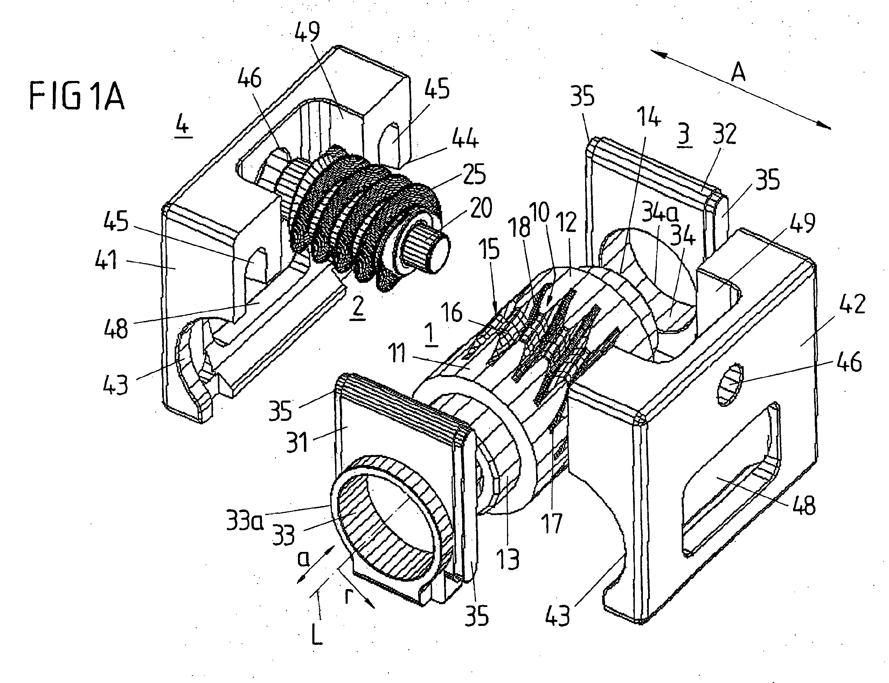

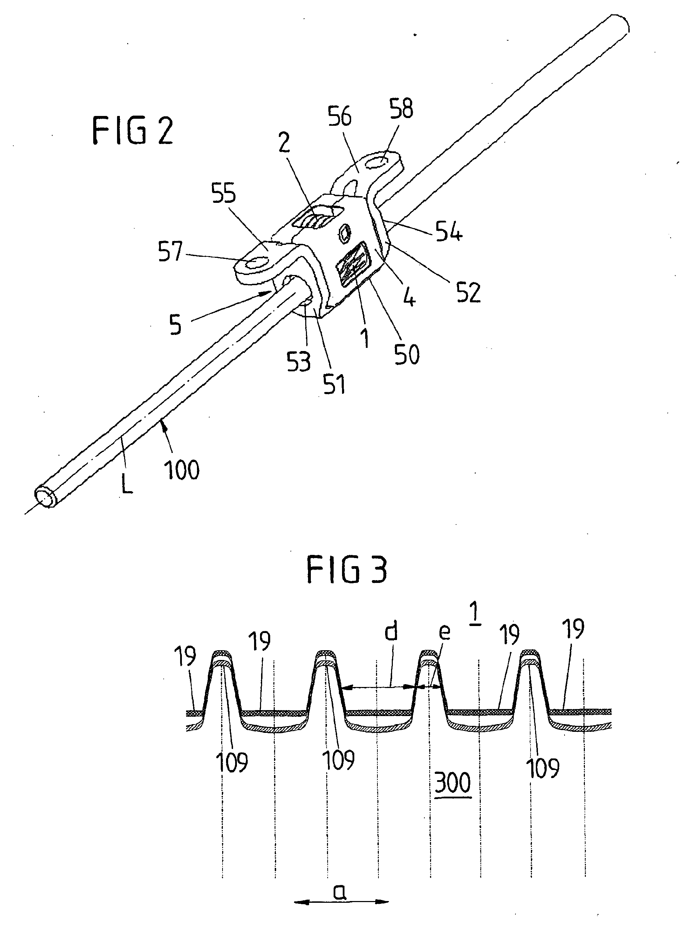

Das in den Fig. 1a bis 1c und 2 dargestellte Verstellgetriebe für ein Kraftfahrzeug, insbesondere zur Einstellung der Sitzlängsposition eines Kraftfahrzeugsitzes mittels einer Schienenlängsführung, umfasst eine feststehende (drehfest gelagerte) Gewindespindel 100, eine darauf drehbar angeordnete Spindelmutter 1 sowie eine die Spindelmutter antreibende Antriebsschnecke 2. Dabei sind die Spindelmutter 1 und die Antriebsschnecke 2 in einem Getriebegehäuse 3, 4 gelagert.

Zur Verwendung dieses Getriebes in einer Sitzlängsverstellung, die zwei zueinander verschiebliche, ineinander greifende Führungsschienen umfasst, wird die feststehende Gewindespindel 100 an einer der beiden Führungsschienen befestigt und wird das Getriebegehäuse 3, 4 zusammen mit der Spindelmutter 1 und der Schnecke 2 über eine Halterung 5 an der anderen Führungsschiene angeordnet und mit dieser verbunden. Der Antriebsschnecke 2 ist ein in den Figuren nicht dargestellter Antrieb, z. B. in Form eines Antriebsmotors zugeordnet, der bei Betätigung eine Drehbewegung der Antriebsschnecke 2 auslöst, welche wiederum zu einer Drehbewegung der mit der Schneckenverzahnung 25 über ihre Außenverzahnung 15 in Eingriff stehenden Spindelmutter 1 führt. Aufgrund des Zusammenwirkens der Spindelmutter 1 mit der drehfest gelagerten Gewindespindel 100 kommt es zu einer Verschiebung der Gewindespindel 100 relativ zu der Spindelmutter 1 entlang der Längsachse L von Spindelmutter 1 und Gewindespindel 100. Dies führt wiederum zu einer Relativbewegung der beiden Führungsschienen entlang jener Richtung L, da die eine Führungsschiene der Gewindespindel 100 und die andere Führungsschiene der Spindelmutter 1 zugeordnet ist und die Längsachse L von Spindelmutter 1 und Gewindespindel 100 der Verstellrichtung der zueinander verschiebbaren Führungsschienen entspricht.

Derartige Verstellgetriebe für Kraftfahrzeugsitze sind bekannt. Nachfolgend werden die Besonderheiten des in den Figuren 1a bis 1c und Fig. 2 dargestellten Verstellgetriebes erläutert, die zu einem besonders kompakten, leichten und gleichzeitig stabilen Aufbau des Verstellgetriebes führen.

Die Spindelmutter 1 weist eine zylindrische Kontur (mit einer als Zylindermantel ausgebildeten äußeren Oberfläche 10) auf, in die eine Außenverzahnung 15 eingearbeitet ist und die an ihren beiden axialen Endabschnitten 11, 12 jeweils frei von Verzahnungsbereichen ist. Die Außenverzahnung 15 der Spindelmutter 1 ist dadurch charakterisiert, dass sie verglichen mit den verzahnungsfreien axialen Endabschnitten 11, 12 der Spindelmutter 1 in radialer Richtung r (senkrecht zur Längs- bzw. Drehachse L der Spindelmutter 1) nach innen weist. Das heißt, die Ausdehnung der Spindelmutter 1 in radialer Richtung r ist im Bereich der Außenverzahnung 15 kleiner oder abschnittsweise allenfalls genauso groß wie in den verzahnungsfreien Endabschnitten 11, 12, die sich in axialer Richtung a jeweils an die Außenverzahnung 15 anschließen. Alternativ kann die Spindelmutter 1 auch nur einen Endabschnitt ohne Außenverzahnung aufweisen.

Der mindestens eine verzahnungsfreie axiale Endabschnitt 11, 12 der Spindelmutter 1 kann dabei in axialer Richtung a der Spindelmutter 1 so dünn sein, dass er im Wesentlichen eine am äußeren Umfang der Spindelmutter 1 umlaufende Linie bildet, also die Außenverzahnung 15 der Spindelmutter 1 sich nahezu bis zum äußersten axialen Rand der Spindelmutter erstreckt und erst unmittelbar an diesem Rand in einen axialen Endabschnitt 11 bzw. 12 ohne Zahnungsbereiche übergeht.

Zur Vergrößerung des Abstützdurchmessers und -querschnitts beim Zusammenwirken der Außenverzahnung 15 der Spindelmutter 1 mit der Schneckenverzahnung 25 der auf einer Antriebswelle 20 gelagerten Antriebsschnecke 2 ist die Außenverzahnung 15 der Spindelmutter 1 einer Schneckenradverzahnung (Globoidverzahnung) angenähert, das heißt, die Außenverzahnung 15 ist im Wesentlichen globoidisch. Jedoch ist der in axialer Richtung a mittlere Bereich 16 der Außenverzahnung 15 in einem zylindrischen Anteil im Zahnverlauf mit einem Zahnprofil (z. B. nach Art einer Evolventenverzahnung) ausgeführt, um die Toleranzlage der Antriebsschnecke 2 axial zur Spindelmutter 1 zu erweitern und hierdurch Geräuschprobleme zu vermeiden. Beidseits des mittleren Bereiches 16 der Außenverzahnung 15 geht durch eine stetige radiale Verringerung der Zahntiefe (Zahnhöhe) in den axialen Randbereichen 17, 18 der Außenverzahnung 15 der Verzahnungsbereich der Spindelmutter 1 kontinuierlich in die verzahnungsfreien Endabschnitte 11, 12 der Spindelmutter 1 über.

Im Fall eines im Wesentlichen linienartigen verzahnungsfreien Endabschnittes 11, 12 der Spindelmutter 1 bedeutet dies, dass die Verringerung der Zahntiefe bzw. Zahnhöhe auf den Wert Null, entsprechend einem Übergang in einen verzahnungsfreien Endabschnitt 11, 12, erst unmittelbar am jeweiligen axialen Ende der Spindelmutter 1 erfolgt. Für eine maximale Stabilität vorteilhaft ist dabei, dass die Zahntiefe an mindestens einem axialen Ende der Spindelmutter gegen den Wert Null geht (den Wert Null annimmt), so dass dort ein (wenn auch in axialer Richtung beliebig dünner) Endabschnitt 11 bzw. 12 ohne Außenverzahnung gebildet ist.

Insgesamt trägt die beschriebene Ausbildung der äußeren Oberfläche 10 der Spindelmutter 1 mit der nach innen eingearbeiteten Außenverzahnung 15, die in radialer Richtung r nicht über die Endabschnitte 11, 12 hervorsteht, erheblich zu einer erhöhten Stabilität der Spindelmutter 1 bei, die dementsprechend aus Kunststoff als einem besonders leichten Werkstoff ausgeführt sein kann.

Eine weitere Besonderheit liegt darin, dass sich die als Gewinde ausgeführte Innenverzahnung 19 der Spindelmutter 1 in axialer Richtung a über eine größere Länge erstreckt als die Außenverzahnung 15, um die Tragfähigkeit des Gewindes zu erhöhen. Die Innenverzahnung 19 (in Form eines Innengewindes) erstreckt sich über die gesamte axiale Länge der Spindelmutter 1, also auch entlang der auf ihrer Außenseite verzahnungsfreien Endabschnitte 11, 12 (und gegebenenfalls auch entlang des jeweiligen Lagerbundes 13, 14, der keinen Bestandteil der Spindelmutter im engeren Sinne bildet). Ferner weisen die Zahnelemente (Gewindeelemente) der Innenverzahnung 19 (in Form eines Innengewindes) der Spindelmutter 1 eine Dicke d (Ausdehnung in axialer Richtung a) auf, die größer ist als die Lückenweite e, insbesondere mindestens doppelt so groß ist, z. B. entsprechend einem Verhältnis 70 : 30. Dementsprechend sind die Zahnelemente (Gewindeelemente) des Außengewindes 109 der Gewindespindel 100 erheblich dünner als diejenigen der Innenverzahnung 19 (Innengewinde) der Spindelmutter 1. Denn die Dicke der Verzahnungselemente (Gewindeelemente) der Gewindespindel 100 entspricht im Wesentlichen der Lückenweite e der Innenverzahnung 19 der Spindelmutter 1.

Die Spindelmutter 1 und die zugeordnete Antriebsschnecke 2 sind in einem aus Kunststoff bestehenden Getriebegehäuse 3, 4 angeordnet, dass aus einem Lagerbestandteil 3 mit zwei Lagerplatten 31, 32 und einem äußeren Gehäusebestandteil 4 mit zwei im Querschnitt im Wesentlichen U-förmigen Gehäuseplatten 41, 42 gebildet wird.

Die beiden aus Kunststoff bestehenden Lagerplatten 31, 32 weisen jeweils eine Lageröffnung 33, 34 als Lagerstelle für einen zugeordneten Lagerbund 13, 14 der Spindelmutter 1 auf, welcher jeweils stirnseitig in axialer Richtung von der Spindelmutter 1 absteht. Die beiden Lagerabschnitte 33, 34 werden gebildet durch Lageröffnungen und weisen im Vergleich zur Dicke der Lagerplatten 31, 32 eine vergrößerte Ausdehnung in axialer Richtung a auf, indem von der jeweiligen Lagerplatte 31, 32 ein entsprechender, die jeweilige Lageröffnung 33, 34 umgreifender Wandabschnitt 33a, 34a in axialer Richtung a senkrecht absteht. (Hierbei kann ein Axialspiel der Spindelmutter durch Verschieben der Lagerplatten 31, 32 in axialer Richtung minimiert werden.) Der Kunststoff für die Lagerplatten 31, 32, insbesondere deren Lagerstellen 33, 34 ist derart gewählt, dass sich eine optimale Reibpaarung beim Zusammenwirken mit dem jeweiligen Lagerbund 13, 14 der ebenfalls aus Kunststoff bestehenden Spindelmutter 1 ergibt. Die zugeordnete Antriebschnecke besteht demgegenüber vorzugsweise aus Metall.

Auf dem jeweiligen Lagerbund 13, 14 der Spindelmutter 1 kann ein Armierungsring, insbesondere in Form einer Scheibe, bestehend vorzugsweise aus Metall (Stahl) angeordnet sein, der der Stabilisierung der Spindelmutter dient, insbesondere bei sehr dünner axialer Ausbildung der verzahnungsfreien Endabschnitte 11, 12. Der Durchmesser eines derartigen Ringes ist möglichst groß gewählt, insbesondere derart, dass er mit dem Durchmesser der axialen Endabschnitte 11, 12 übereinstimmt. Der jeweilige Ring befindet sich in axialer Richtung a betrachtet auf dem jeweiligen Lagerbund 13, 14 jeweils zwischen dem zugeordneten axialen Endabschnitt 11, 12 der Spindelmutter 1 und der zugehörigen Lagerplatte 31, 32, so dass sich die jeweilige Lagerplatte 31, 32 über diesen jeweiligen Ring an dem zugeordneten axialen Endabschnitt 11, 12 der Spindelmutter 1 abstützen kann.

Weiterhin kann der für die Herstellung der Lagerplatten 3 oder des Getriebegehäuses 3, 4 verwendete Kunststoff wärmeableitend sein, so dass im Betrieb des Verstellgetriebes an den Lagerstellen 33, 34 auftretende Wärme abgeleitet werden kann.

Die beiden ebenfalls aus Kunststoff bestehenden äußeren Gehäuseplatten 41, 42 des Getriebegehäuses 3, 4 sind im Querschnitt jeweils U-förmig ausgebildet mit einer Basisfläche 410 bzw. 420 sowie mit hiervon abstehenden seitlichen Schenkeln 411, 412 bzw. 421, 422. Sie weisen in ihren Schenkeln 411, 412 bzw. 421, 422 jeweils stirnseitig Ausnehmungen 45 auf, die zur Herstellung einer Steckverbindung über die Stirnseiten 35 der Lagerplatten 31, 32 steckbar (schiebbar) sind. Zusätzlich umgreifen die U-förmigen Gehäuseplatten 41, 42 im zusammengesteckten Zustand mit bogenförmigen Ausnehmungen 43, 44 die Lagerabschnitte 33, 34 der Lagerplatten 3, 4 und tragen zu deren Stabilisierung bei.

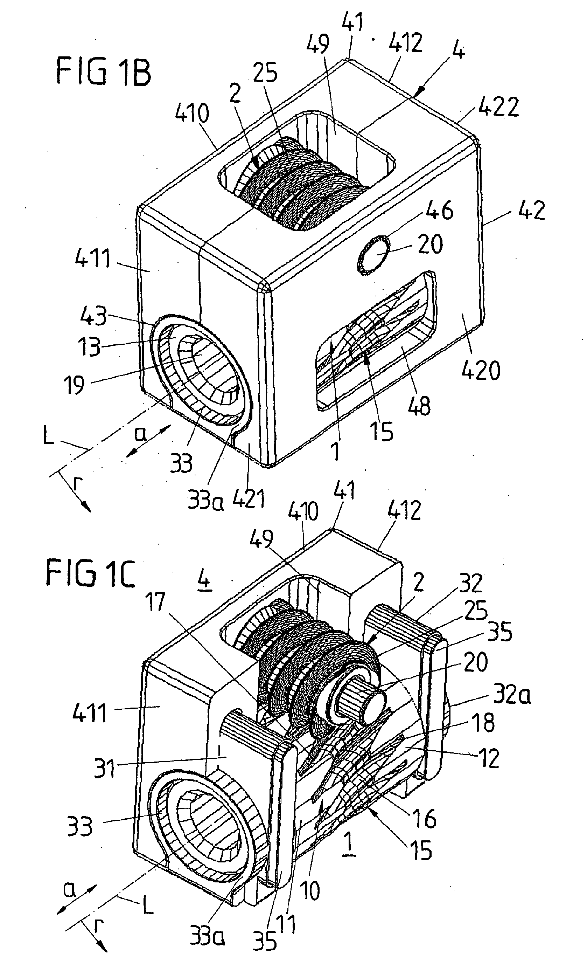

Wie anhand der Figuren 1 bund 1c deutlich wird, sind die Lagerplatten 31, 32 im zusammengesteckten Zustand des Getriebegehäuses 3, 4 von den U-förmigen Gehäuseplatten 41, 42 im Wesentlichen vollständig umschlossen. Zur Lagerung der Antriebsschnecke 2 weisen die Gehäuseplatten 41, 42 entsprechende Lageröffnungen 46 auf.

In einer Abwandlung des anhand der Figuren beschriebenen Ausführungsbeispiels kann die Spindelmutter 1 auch unmittelbar mittels ihrer Endabschnitte 11, 12 in dem Getriebegehäuse gelagert werden, und zwar direkt kreisbogenförmigen Ausnehmungen 43, 44 der U-förmigen äußeren Gehäuseplatten 41, 42. Die inneren Lagerplatten 31, 32 können dann entfallen.

Ferner weist jede der beiden Gehäuseplatten 41, 42 in ihrer Basisplatte 410 bzw. 420 eine Aussparung in Form einer fensterartigen Öffnung 48 auf, in die die Spindelmutter 1 mit ihrer Außenverzahnung 15 radial hineinragt. Die beiden einander gegenüberliegenden fensterartigen Öffnungen 48 erstrecken sich parallel zur Längsachse L (Drehachse) der Spindelmutter 1 und sind in radialer Richtung r von dieser beabstandet. Sie sind also im Wesentlichen senkrecht zu den Lageröffnungen 33, 34 für die Spindelmutter 1 orientiert.

In entsprechender Weise bilden die beiden U-förmigen Gehäuseplatten 41, 42 im zusammengebauten Zustand zwischen ihren Schenkeln 411, 412 und 421, 422 eine weitere fensterartige Öffnung 46 aus, die sich parallel zur Drehachse (Antriebswelle 20) der Antriebsschnecke 2 erstreckt und in radialer Richtung von dieser beabstandet ist. Dies ermöglicht ein radiales Eingreifen der Antriebsschnecke 2 mit ihrer Schneckenverzahnung 25 in die fensterartige Öffnung 49 auf ihrer der Spindelmutter 1 abgewandten Seite.

Durch die fensterartigen Öffnungen 48, 49 wird der kompakte Aufbau des Verstellgetriebes noch verbessert. Denn der Raum für die Spindelmutter 1 und die Antriebsschnecke 2 muss nicht vollständig im Inneren des Getriebegehäuses 3, 4 zur Verfügung gestellt werden, sondern die Getriebeelemente 1, 2 können teilweise in die seitlichen Begrenzungswände (Gehäuseplatten 41, 42) des Getriebegehäuses hineinragen. Gleichzeitig wird hierdurch eine Geräuschentwicklung innerhalb des Getriebegehäuses als Folge von Resonanzen verhindert.

An den beiden äußeren Gehäuseplatten 41, 42 und gegebenenfalls den Lagerplatten 31, 32 können federnde Elemente vorgesehen sein, z. B. in Form angespritzter Entkopplungselemente, um eine akustische Entkopplung von dem Fahrzeugteil (z. B. einem Sitzteil in Form einer Führungsschiene) zu realisieren, an dem das Getriebegehäuse 3, 4 angeordnet und befestigt wird. Diese federnden Elemente (Entkopplungselemente) können bei Verwendung eines Mehrkomponenten-Spritzgussverfahrens zur Herstellung der Gehäuseteile aus einem anderen Kunststoff bestehen als die Gehäuseteile selbst. Alternativ können entsprechende federnde Elemente auch als separate Bauteile am Getriebegehäuse 3, 4 angeordnet werden.

Zur Befestigung des Getriebegehäuses 3, 4 an einem Kraftfahrzeugteil in Form einer Führungsschiene für einen Kraftfahrzeugsitz dient gemäß Fig. 2 eine im Querschnitt im Wesentlichen U-förmige Halterung 5 aus Metall mit einer Basis 50 und zwei seitlichen Schenkeln 51, 52, die jeweils Durchgangsöffnungen 53, 54 für die Gewindespindel 100 aufweisen. Von den beiden Schenkeln 51, 52 der Halterung, zwischen denen das Gehäuse 3, 4 derart aufgenommen ist, dass den Schenkeln 51, 52 jeweils eine Lagerplatte 33, 34 gegenüberliegt (unter Zwischenlage der Schenkel 411, 412; 421, 422 der U-förmigen Gehäuseplatten 41, 42), steht jeweils ein Befestigungsflansch 55, 56 mit einer Befestigungsstelle in Form einer Befestigungsöffnung 57 bzw. 58 ab, die die Befestigung der Halterung 5 an einer Führungsschiene eines Kraftfahrzeugsitzes ermöglicht.

Aufgrund des stabilen Aufbaus des Verstellgetriebes 1, 2 und des zugeordneten Getriebegehäuses 3, 4 sowie aufgrund der stabilen Umfassung des Verstellgetriebes 1, 2 und des Getriebegehäuses 3, 4 mittels der Schenkel 51, 52 der U-förmigen Halterung 5 wird trotz der leichten und kompakten Bauweise des Verstellgetriebes 1, 2 und des Getriebegehäuses 3, 4 eine besondere Wiederstandsfähigkeit der gesamten Anordnung gegenüber äußeren Kräften, insbesondere in einem Crash-Fall erreicht. In einem Crash-Fall, insbesondere einem Front- oder einem Heck-Crash des entsprechenden Kraftfahrzeuges, muss sichergestellt sein, dass die Spindelmutter 1 nicht entlang der Längsrichtung der Gewindespindel 100 durchrutscht; denn dies würde zu einer entsprechenden Beschleunigung des zugeordneten Kraftfahrzeugsitzes mit einem erhöhten Verletzungsrisiko für den Sitzbenutzer führen. Hierzu ist die Spindelmutter 1 stabil zwischen den Lagerplatten 31, 32 und den Schenkeln 51, 52 der U-förmigen Halterung 5 gehalten und wird in einem Crash-Fall in axialer Richtung a zuverlässig abgestützt, so dass sie nicht in Richtung der Längsachse L entlang der Spindel 100 rutschen kann.

Zur Herstellung des in den Figuren 1a bis 3 dargestellten Verstellgetriebes 1, 2 mit Getriebegehäuse 3, 4 wird bevorzugt ein Mehrkomponenten-Spritzgussverfahren angewandt, wobei bevorzugt sämtliche Verfahrensschritte in einem einzigen Spritzgusswerkzeug durchgeführt werden. Hierbei wird in jenem Werkzeug zunächst die Spindelmutter 1 gespritzt und anschließend werden in dem gleichen Werkzeug die beiden Lagerplatten 31, 32 gespritzt. Hierdurch wird bereits beim Spritzgießen eine Lagerung der Spindelmutter 1 in den beiden Lagerplatten 31, 32 erreicht, so dass kein nachträglicher Zusammenbau der Lagerplatten 31, 32 und der Spindelmutter 1 erforderlich ist.

Sodann wird die Antriebsschnecke 2 in das Spritzgusswerkzeug eingelegt und es werden die äußeren, U-förmigen Gehäuseplatten 41, 42 gespritzt, wobei (aufgrund der im Spritzgusswerkzeug befindlichen Lagerplatten 31, 32 und Antriebsschnecke 2) schon beim Spritzgießen die Verbindung mit den Lagerplatten 31, 32 in den Ausnehmungen 45 und die Lagerung der Antriebsschnecke 2 in den zugeordneten Lageröffnungen 46 erfolgt. Sodann kann das komplett fertiggestellte Getriebegehäuse 3, 4 mit dem darin gelagerten Verstellgetriebe 1, 2 aus dem Spritzgusswerkzeug entnommen werden.

Bei den vorliegend beschriebenen Verfahrensschritten kann die Reihenfolge der Prozessschritte - je nach Auslegung des Verstellgetriebes und des Getriebegehäuses im Einzelfall - geändert werden. Ferner kann die Montage der Antriebsschnecke 2 auch erst nachträglich durch Einclipsen in das Getriebegehäuse 3, 4 erfolgen.

Im Rahmen eines Mehrkomponenten-Spritzgussverfahrens können dabei für die Spindelmutter 1, die Lagerplatten 31, 32 und die äußeren U-förmigen Gehäuseplatten 41, 42 unterschiedliche Kunststoffe verwendet werden.

Nach einem anderen Herstellungsverfahren werden die Lagerplatten 31, 32 und die äußeren U-förmigen Gehäuseplatten 41, 42 als Einzelteile separat aus Kunststoff hergestellt (spritzgegossen), dann an ihren Steckverbindungen 35, 45 zusammengesteckt und im Bereich der Steckverbindungen durch umformende oder thermische Verfahren, wie z. B. Laserschweißen, Heißverstemmen, Ultraschallschweißen oder in sonstiger Weise, z. B. durch Kleben, aneinander fixiert.

In jedem Fall erfolgt die Verbindung der einzelnen Gehäuseteile 31, 32; 41, 42 (also der Lagerplatten 31, 32 mit den äußeren U-förmigen Gehäuseplatten 41, 42) ausschließlich an den Steckverbindungen 35, 45, mittels derer die Lage der Gehäuseteile 31, 32; 41, 42 zueinander entlang sämtlicher Raumrichtungen festgelegt ist. Als Verbindungsstellen zwischen den Gehäuseteilen 31, 32; 41, 42 dienen bevorzugt lediglich die Steckverbindungen 35, 45, die entweder direkt beim Spritzgießen aller Gehäuseteile in einem Spritzgusswerkzeug hergestellt und fixiert werden oder bei separatem Spritzgießen der einzelnen Gehäuseteile nachträglich durch Zusammenstecken hergestellt und in einem zusätzlichen Verbindungsschritt aneinander fixiert werden.

Als zusätzlicher Verbindungsschritt zur Verbindung der äußeren U-förmigen Gehäuseplatten 41, 42 mit den Lagerplatten 31, 32 im Bereich der Steckverbindungen 35, 45 eignet sich vor allem Laserschweißen. Hierzu sind die äußeren, U-förmigen Gehäuseplatten 41, 42 bevorzugt aus einem für die verwendete Laserstrahlung transparenten Material ausgeführt, während die inneren Lagerplatten 31, 32 die entsprechende Laserstrahlung absorbieren und dabei angeschmolzen werden, so dass eine Verbindung zwischen den inneren Lagerplatten 31, 32 und den äußeren, U-förmigen Gehäuseplatten 41, 42 im Bereich der Steckverbindungen hergestellt wird. Die gewünschte Absorption der Laserstrahlung durch die inneren Lagerplatten 31, 32 kann dabei durch Zugabe von Ruß zu dem Material dieser Lagerplatten erreicht werden.

Vor oder während des Verschweißens der Gehäuseplatten 31, 32; 41, 42 des Getriebegehäuses 3, 4 kann noch axiales Lagerspiel zwischen den Lagerplatten 31, 32 und der Spindelmutter 1 beseitigt werden, indem eine definierte axiale Kraft auf die Lagerplatten 31, 32 aufgebracht wird, bevor der Schweißvorgang abgeschlossen ist.

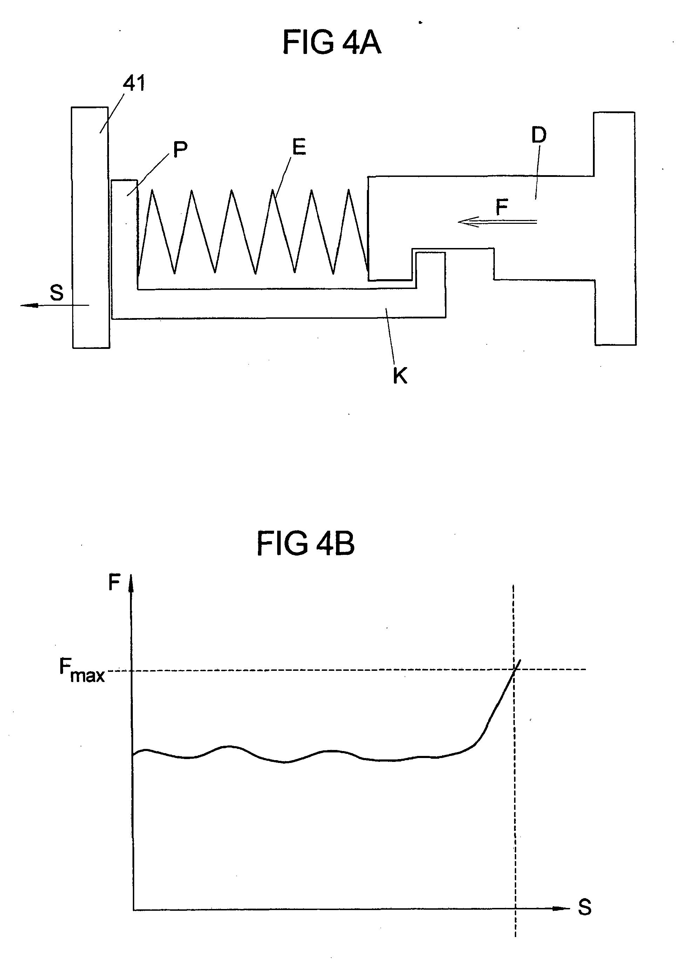

Nachfolgend wird anhand der Figuren 4a bis 7 eine besonders vorteilhafte Methode zur Herausnahme bzw. Reduzierung von eventuellem Spiel, wie z. B. von Lagerspiel der Getriebeelemente 1, 2 des Verstellgetriebes in den zugeordneten Lagerbereichen des Getriebegehäuses 3, 4 und/oder von Spiel beim Zusammenwirken der Getriebeelemente des Verstellgetriebes 1, 2 selbst bzw. von Spiel im Bereich der Steckverbindungen 35, 45 des Getriebegehäuses 3, 4 erläutert werden.

Hierzu wird gemäß Figur 4a während des Anschmelzens von Material im Bereich der Steckverbindungen 35, 45 auf ein äußeres Gehäuseteil 41 in Form einer Gehäuseplatte mittels einer Spannvorrichtung eine Spannkraft F ausgeübt.

Die Spannvorrichtung umfasst eine an der Außenseite der entsprechenden Gehäuseplatte 41 anliegende Spannplatte P auf die über ein elastisches Element E in Form einer Druckfeder ein druckerzeugender, in einer Führungskulisse K geführter, längsbeweglicher Schieber D mit einer definierten Spannkraft F einwirkt. Hierdurch wird die entsprechende Gehäuseplatte 41 bezüglich der in geeigneter Weise räumlich zu fixierenden oder ebenfalls elastisch vorzuspannenden gegenüberliegenden Gehäuseplatte 42 verspannt und gleichzeitig auch bezüglich der dazwischen liegenden Gehäusebaugruppe, bestehend aus den beiden Lagerplatten 31, 32 verspannt.

Die Verspannung erfolgt in dem in Figur 4a dargestellten Ausführungsbeispiel entlang der Montageachse A (vergleiche Figur 1a), entlang der die äußeren Gehäuseplatten 41, 42 zum Zusammenstecken auf die Lagerplatten 31, 32 aufsetzbar sind. Die Verspannung kann jedoch auch quer zur Montagerichtung A erfolgen.

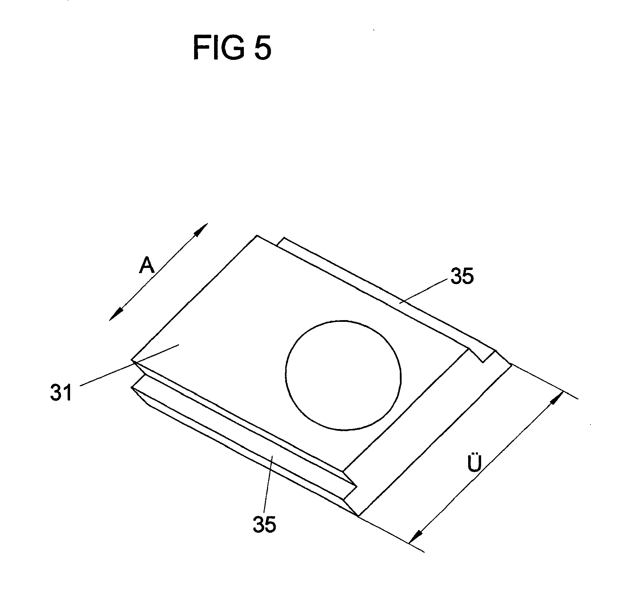

Wie anhand Figur 5 dargestellt, weisen die Lagerplatten 31, 32 in Montagerichtung A bevorzugt ein Übermaß Ü auf, d. h., die durch Vorsprünge gebildeten, als Steckabschnitte dienenden Stirnseiten 35 der jeweiligen Lagerplatte 31 bzw. 32 weisen eine solche Ausdehnung auf, dass die Ausdehnung der jeweiligen Lagerplatte 31, 32 insgesamt entlang der Montageachse A größer ist als im fertig zusammengebauten Getriebegehäuse vorgesehen.

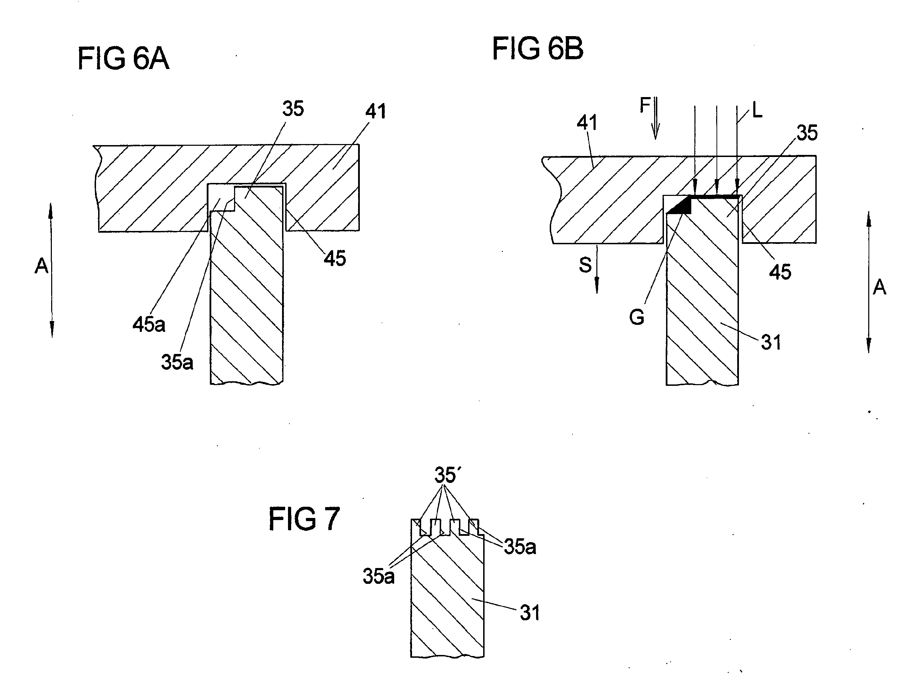

Dieses Übermaß wird gemäß den Figuren 6a und 6b auf das Endmaß reduziert, wenn mittels Laserstrahlung L die durch Vorsprünge gebildeten Stirnseiten 35 der Lagerplatten 31, 32, z. B. durch Laser- oder Ultraschallschweißen, angeschmolzen werden. Hierbei fließt ein Teil des angeschmolzenen Materials der entsprechenden Stirnseite 35 der jeweiligen Lagerplatte 31 oder 32 als Schmelzgut G in einen Freiraum 45a der Ausnehmung 45 der entsprechenden Gehäuseplatte 41, in die die jeweilige Lagerplatte 31 oder 32 zur Bildung eines Eingriffs- bzw. Steckbereiches 35, 45 mit ihrer zugeordneten Stirnseite 35 eingreift. Die Bildung des entsprechenden Freiraums 45a wird ermöglicht durch eine Schulter 35a an der jeweiligen Stirnseite 35 jeder Lagerplatte 31,32.

Der Anschmelzvorgang wird dabei bevorzugt nach dem Aufbringen der Vorspannkräfte auf die hierfür vorgesehenen Elemente des Gehäuses 3, 4, z. B. auf mindestens eine der äußeren Gehäuseplatten 41, 42, durch Inbetriebnahme eines die Laserstrahlung L erzeugenden Lasers in Gang gesetzt.

Unter der Wirkung der Vorspannkraft F führt die Gehäuseplatte 41 eine Setzbewegung s in Vorspannrichtung entlang der Montageachse A aus, wobei die angestrebte Herausnahme bzw. Reduktion von Spiel im Verstellgetriebe 1, 2 sowie in den Lagerstellen der Getriebeelemente des Verstellgetriebes 1, 2 im Gehäuse 3, 4 erfolgen kann.

Figur 7 zeigt eine Abwandlung des stirnseitigen Endes einer Lagerplatte 31, die hier eine Mehrzahl jeweils eine Schulter 35a bildender Vorsprünge 35' aufweist.

Damit die Laserstrahlung L gezielt auf die Vorsprünge 35 der Lagerplatten 31, 32 einwirken kann, sind die Gehäuseplatten 41, 42 bevorzugt aus einem für die entsprechende Laserstrahlung L transparenten Material hergestellt.

Zur Steuerung bzw. Regelung des Anschmelzvorganges kann mindestens ein Abschaltkriterium definiert sein, bei dessen Erreichen der Anschmelz- bzw. Schweißvorgang abgebrochen wird.

Hierzu kann beispielsweise vorgesehen sein, dass die Geschwindigkeit und/oder Dynamik der Setzbewegung s der unter Vorspannung stehenden Gehäuseplatte 41 oder 42 überwacht wird.

Das Abschaltkriterium kann dann beispielsweise darin bestehen, dass die Geschwindigkeit der Setzbewegung s, mit der sich die unter Vorspannung stehende Gehäuseplatte 41 bezüglich der gegenüberliegenden Gehäuseplatte 42 bzw. bezüglich der Lagerplatten 31, 32 bewegt, einen bestimmten Mindestwert unterschreitet. Dies deutet darauf hin, dass im Verstellgetriebe 1, 2 und im Getriebegehäuse 3, 4 noch vorhandenes Spiel herausgenommen wurde und beispielsweise ein Anschlag angefahren wurde, der eine weitere Setzbewegung s nicht mehr zulässt. Dies kann z. B. darauf zurückzuführen sein, dass die Gehäuseplatten 41, 42 in Anschläge der jeweils zugeordneten Stirnseiten der Lagerplatten 31, 32 gefahren sind.

Andererseits kann der Prozess auch kraftgesteuert sein, indem das Abschaltkriterium gemäß Figur 4b durch Überwachung der Reaktionskraft F (unter Beachtung des Prinzips Actio gleich Reactio) definiert ist, die durch die Einwirkung der Spannvorrichtung auf eine Gehäuseplatte 41 erzeugt wird. Diese Kraft F ist am Beginn des Anschmelz- bzw. Schweißvorganges im Wesentlichen konstant, da das elastische Element E in Form einer Druckfeder, über das die Spannvorrichtung auf die Gehäuseplatte 41 einwirkt, eine Nachführung des druckerzeugenden Schiebers D während der Setzbewegung s der Gehäuseplatte 41 in Richtung der Setzbewegung s zulässt. Wenn schließlich der Spielausgleich soweit abgeschlossen ist, dass durch das Zusammenwirken eines Anschlags mit einem Gegenanschlag eine weitere Setzbewegung s nicht mehr möglich ist, dann steigt die Kraft F steil an, wobei das Erreichen einer Maximalkraft Fₘₐₓ als Abschaltkriterium für die Beendigung des Anschmelz- bzw. Schweißvorganges dient.

Weiterhin kann als Abschaltkriterium auch das Erreichen eines bestimmten Setzweges bei der Setzbewegung s, z. B. der Gehäuseplatte 41, verwendet werden. Das Abschaltkriterium wird üblicherweise so gewählt, dass der zu erreichende Setzweg mindestens der Differenz zwischen dem Übermaß Ü der Lagerplatten 31, 32 entlang der Montageachse A und dem angestrebten Endmaß nach Abschluss der Montage des Getriebegehäuses, also insbesondere auch nach Abschluss des Anschmelz- bzw. Schweißvorganges, entspricht.

Ferner lässt sich ein besonders einfaches Abschaltkriterium auch dadurch definieren, dass eine bestimmte Zeitdauer des Anschmelz- bzw. Schweißvorganges vorgegeben wird, also der den Vorgang auslösende Laser nur für einen bestimmten, vorgegebenen Zeitraum betrieben wird.

Auch wenn eines der anderen, nicht auf das Erreichen eines bestimmten Mindestsetzweges gerichteten Abschaltkriterien verwendet wird, so kann auch in diesen Fällen das Erreichen eines vorgegebenen Mindestsetzweges zusätzlich als Qualitätskriterium herangezogen werden, indem als Voraussetzung für einen ordnungsgemäßen Abschluss des Schweißvorganges angesehen wird, dass die Setzbewegung einen vorgegebenen Mindestsetzweg nicht unterschreitet.

Um das Erreichen des vorgegebenen Mindestsetzweges soweit wie möglich sicherzustellen, kann die Laserleistung in Abhängigkeit von der Geschwindigkeit der Setzbewegung geregelt werden, insbesondere in der Weise, dass die Laserleistung erhöht wird, wenn die Setzgeschwindigkeit während des Schweißvorganges unter einem vorgegebenen Normalwert liegt, und umgekehrt die Laserleistung reduziert wird, wenn die Setzgeschwindigkeit über dem vorgegebenen Normalwert liegt.

Wird der vorgegebene Mindestsetzweg während des Schweißvorganges nicht erreicht, so kann dies ein Hinweis darauf sein, dass die angestrebte Herausnahme des Spiels nicht in vollem Umfang erfolgt ist, so dass das entsprechende Getriebegehäuse nachbehandelt oder gegebenenfalls als fehlerhaftes Teil aussortiert werden muss.

## Patentansprüche

1. Verfahren zur Montage eines in einem Getriebegehäuse (3, 4) angeordneten Verstellgetriebes (1, 2) für ein Kraftfahrzeug, bei dem mindestens ein Gehäuseteil (41) mit einer weiteren Gehäusebaugruppe (3, 42) in Eingriff gebracht wird und das Gehäuseteil (41) an der weiteren Gehäusebaugruppe (3, 42) festgelegt wird, indem im Eingriffsbereich (35, 45) des Gehäuseteiles (41) mit der Gehäusebaugruppe (3, 42) Material angeschmolzen wird,
**dadurch gekennzeichnet,**
**dass** das Gehäuseteil (41) und die weitere Gehäusebaugruppe (3, 42) bei dem Anschmelzen elastisch zueinander verspannt werden, wobei an dem Gehäuseteil (41) und/oder der weiteren Gehäusebaugruppe (3, 42) eine Spannvorrichtung angreift, um das Gehäuseteil (41) und die weitere Gehäusebaugruppe (3, 42) zueinander zu verspannen, wobei die Spannvorrichtung unter Zwischenschaltung eines elastischen Elementes (E) an dem zugeordneten Element (3, 41, 42) des Gehäuses (3, 4) angreift.

2. Verfahren nach Anspruch 1, **dadurch gekennzeichnet, dass** das Gehäuseteil (41) und die weitere Gehäusebaugruppe (3, 42) entlang einer Montageachse (A) miteinander in Eingriff gebracht werden, wobei der Eingriffsbereich (35, 45) durch einen Steckbereich gebildet wird, das Gehäuseteil (41) und die weitere Gehäusebaugruppe (3, 42) durch Zusammenstecken miteinander in Eingriff gebracht werden und das Gehäuseteil (41) und die weitere Gehäusebaugruppe (3, 42) insbesondere entlang der Montageachse (A) gegeneinander verspannt werden.

3. Verfahren nach Anspruch 2, **dadurch gekennzeichnet, dass** das Gehäuseteil (41) und die weitere Gehäusebaugruppe (3, 42) in einer Richtung (a), die eine Richtungskomponente quer zur Montageachse (A) aufweist, insbesondere senkrecht zur Montageachse (A) zueinander verspannt werden.

4. Verfahren nach einem der vorangehenden Ansprüche, **dadurch gekennzeichnet, dass** als weitere Gehäusebaugruppe ein zweites Gehäuseteil (42) verwendet wird und die beiden Gehäuseteile (41, 42) unmittelbar aneinander festgelegt werden.

5. Verfahren nach einem der Ansprüche 1 bis 3, **dadurch gekennzeichnet, dass** die weitere Gehäusebaugruppe (3) zwischen dem Gehäuseteil (41) und einem zweiten Gehäuseteil (42) aufgenommen wird, wobei die beiden Gehäuseteile (41, 42) mit jeweils einer Stirnseite (35) der Gehäusebaugruppe (3) in Eingriff gebracht und an der jeweils zugeordneten Stirnseite (35) festgelegt werden, indem im Eingriffsbereich (45) des jeweiligen Gehäuseteiles (41, 42) mit der zugeordneten Stirnseite (35) der Gehäusebaugruppe (3) Material des Gehäuseteiles (41, 42) und/oder der Gehäusebaugruppe (3) angeschmolzen wird, wobei die beiden Gehäuseteile (41, 42) zueinander verspannt werden, wodurch mindestens eines der beiden Gehäuseteile (41, 42) auch bezüglich der weiteren Gehäusebaugruppe (3) verspannt wird.

6. Verfahren nach Anspruch 5, **dadurch gekennzeichnet, dass** die beiden Gehäuseteile (41, 42) entlang der Montageachse (A) oder entlang einer Richtung (a), die eine Richtungskomponente senkrecht zur Montageachse (A) aufweist, oder entlang einer senkrecht zur Montageachse (A) erstreckten Richtung zueinander verspannt werden.

7. Verfahren nach einem der Ansprüche 2 bis 6, **dadurch gekennzeichnet, dass** die weitere Gehäusebaugruppe (3) durch zwei Gehäuseelemente (31, 32) gebildet wird, die einander senkrecht zu den beiden Gehäuseteilen (41, 42) gegenüber liegen.

8. Verfahren nach einem der vorangehenden Ansprüche, **dadurch gekennzeichnet, dass** für das mindestens eine Gehäuseteil (41) eine Gehäuseplatte verwendet wird.

9. Verfahren nach einem der vorangehenden Ansprüche, **dadurch gekennzeichnet, dass** beim Anschmelzen des Materials im Eingriffsbereich (35, 45) das mindestens eine Gehäuseteil (41) eine Setzbewegung (s) bezüglich der weiteren Gehäusebaugruppe (3) ausführt, wobei die Setzbewegung (s) insbesondere in Richtung der elastischen Vorspannung erfolgt.

10. Verfahren nach einem der vorangehenden Ansprüche, **dadurch gekennzeichnet, dass** das Material im Eingriffsbereich (35, 45) mittels eines Lasers angeschmolzen wird, wobei nicht anzuschmelzende Bereiche (41, 42) des Gehäuses (3, 4) aus einem für die verwendete Laserstrahlung durchlässigen Material hergestellt sind.

11. Verfahren nach einem der vorangehenden Ansprüche, **dadurch gekennzeichnet, dass** die Dauer des Anschmelzvorganges anhand eines vorgebbaren Kriteriums gesteuert wird, wobei die Dauer des Anschmelzvorganges
- in Abhängigkeit von der Setzbewegung (s) des mindestens eines Gehäuseteiles (41), insbesondere in Abhängigkeit von der Geschwindigkeit und/oder der Dynamik der Setzbewegung (s) oder in Abhängigkeit von dem Ausmaß der Setzbewegung (s), oder
- in Abhängigkeit von der Änderung der Reaktionskraft (F) beim Verspannen des mindestens einen Gehäuseteiles (41) bezüglich der weiteren Gehäusebaugruppe (3, 42)
gesteuert wird, wobei die Dauer des Anschmelzvorganges vorzugsweise bereits am Beginn des Anschmelzvorganges festgelegt wird.

12. Verfahren nach einem der vorangehenden Ansprüche, **dadurch gekennzeichnet, dass** in dem Eingriffsbereich (35, 45) des mindestens einen Gehäuseteiles (41) mit der weiteren Gehäusebaugruppe (3) ein Freiraum (45a) vorgesehen ist, in den beim Anschmelzen des Materials gebildetes Schmelzgut (G) einfließt, wobei der Freiraum (45a) insbesondere im Steckbereich (35, 45) ausgebildet ist.

13. Verfahren nach einem der vorangehenden Ansprüche, **dadurch gekennzeichnet, dass** die Qualität der Verbindung zwischen dem mindestens einen Gehäuseteil (41) und der weiteren Gehäusebaugruppe (3, 42) anhand des Ausmaßes der Bewegung des Gehäuseteiles (41) bezüglich der weiteren Gehäusebaugruppe (3, 42) während des Anschmelzvorganges überprüft wird.

14. Verfahren nach Anspruch 9, 10 und 13, **dadurch gekennzeichnet, dass** die Laserleistung in Abhängigkeit von der Geschwindigkeit der Setzbewegung geregelt wird.

## Claims

1. A method for mounting an adjusting gear unit (1, 2) arranged in a gear unit housing (3, 4) for a motor vehicle, in which at least one housing part (41) is brought in engagement with a further housing assembly (3, 42) and the housing part (41) is fixed at the further housing assembly (3, 42) by melting material in the engagement region (35, 45) of the housing part (41) with the housing assembly (3, 42),
**characterized in**
**that** the housing part (41) and the further housing assembly (3, 42) are elastically braced to each other during melting, wherein a tensioning device engages the housing part (41) and/or the further housing assembly (3, 42), in order to brace the housing part (41) and the further housing assembly (3, 42) to each other, wherein the tensioning device engages the associated element (3, 41, 42) of the housing (3, 4) by interposition of an elastic element (E).

2. The method according to claim 1, **characterized in that** the housing part (41) and the further housing assembly (3, 42) are brought in engagement with each other along a mounting axis (A), wherein the engagement region (35, 45) is formed by a plug-in region, the housing part (41) and the further housing assembly (3, 42) are brought in engagement with each other by plugging together, and the housing part (41) and the further housing assembly (3, 42) are braced against each other in particular along the mounting axis (A).

3. The method according to claim 2, **characterized in that** the housing part (41) and the further housing assembly (3, 42) are braced to each other in a direction (a) which includes a direction component transverse to the mounting axis (A), in particular vertical to the mounting axis (A).

4. The method according to any of the preceding claims, **characterized in that** as further housing assembly a second housing part (42) is used and the two housing parts (41, 42) are directly fixed at each other.

5. The method according to any of claims 1 to 3, **characterized in that** the further housing assembly (3) is accommodated between the housing part (41) and a second housing part (42), wherein the two housing parts (41, 42) are brought in engagement with one end face (35) each of the housing assembly (3) and are fixed at the respectively associated end face (35) by melting material of the housing part (41, 42) and/or the housing assembly (3) in the engagement region (45) of the respective housing part (41, 42) with the associated end face (35) of the housing assembly (3), wherein the two housing parts (41, 42) are braced to each other, whereby at least one of the two housing parts (41, 42) also is braced with respect to the further housing assembly (3).

6. The method according to claim 5, **characterized in that** the two housing parts (41, 42) are braced to each other along the mounting axis (A) or along a direction (a) which includes a direction component vertical to the mounting axis (A), or along a direction extending vertically to the mounting axis (A).

7. The method according to any of claims 2 to 6, **characterized in that** the further housing assembly (3) is formed by two housing elements (31, 32) which oppose each other vertically to the two housing parts (41, 42).

8. The method according to any of the preceding claims, **characterized in that** for the at least one housing part (41) a housing plate is used.

9. The method according to any of the preceding claims, **characterized in that** during melting of the material in the engagement region (35, 45) the at least one housing part (41) performs a setting movement (s) with respect to the further housing assembly (3), wherein the setting movement (s) is made in particular in direction of the elastic pretension.

10. The method according to any of the preceding claims, **characterized in that** the material in the engagement region (35, 45) is molten by means of a laser, wherein regions (41, 42) of the housing (3, 4) not to be molten are made of a material permeable for the used laser radiation.

11. The method according to any of the preceding claims, **characterized in that** the duration of the melting process is controlled with reference to a specifiable criterion, wherein the duration of the melting process is controlled
- in dependence on the setting movement (s) of the at least one housing part (41), in particular in dependence on the speed and/or the dynamics of the setting movement (s) or in dependence on the extent of the setting movement (s), or
- in dependence on the change of the reaction force (F) during bracing of the at least one housing part (41) with respect to the further housing assembly (3, 42),
wherein the duration of the melting process preferably is fixed already at the beginning of the melting process.

12. The method according to any of the preceding claims, **characterized in that** in the engagement region (35, 45) of the at least one housing part (41) with the further housing assembly (3) a free space (45a) is provided, into which molten material (G) flows, which is formed during melting of the material, wherein the free space (45a) is formed in particular in the plug-in region (35, 45).

13. The method according to any of the preceding claims, **characterized in that** the quality of the connection between the at least one housing part (41) and the further housing assembly (3, 42) is checked with reference to the extent of the movement of the housing part (41) with respect to the further housing assembly (3, 42) during the melting process.

14. The method according to claims 9, 10 and 13, **characterized in that** the laser power is controlled in dependence on the speed of the setting movement.

## Revendications

1. Procédé de montage d'un mécanisme de réglage (1, 2) disposé dans un carter de transmission (3, 4) pour un véhicule automobile, pour lequel au moins une partie de carter (41) est amenée en prise avec un autre ensemble de carter (3, 42) et la partie de carter (41) est fixée sur l'autre ensemble de carter (3, 42), par fusion de matière dans la zone de prise (35, 45) de la partie de boîtier (41) avec l'ensemble de boîtier (3, 42),
**caractérisé en ce que**
la partie de carter (41) et l'autre ensemble de carter (3, 42) sont serrés de manière élastique l'un par rapport à l'autre lors de la fusion, un dispositif de serrage agissant sur la partie de carter (41) et/ou l'autre ensemble de carter (3, 42) afin de serrer la partie de carter (41) et l'autre ensemble de carter (3, 42) l'un par rapport à l'autre, le dispositif de serrage agissant sur l'élément correspondant (3, 41, 42) du carter (3, 4) en intercalant un élément élastique (E).

2. Procédé selon la revendication 1, **caractérisé en ce que** la partie de carter (41) et l'autre ensemble de carter (3, 42) sont amenés en prise l'un avec l'autre le long d'un axe de montage (A), la zone de prise (35, 45) étant formée par une zone d'emboitement, la partie de carter (41) et l'autre ensemble de carter (3, 42) étant amenés en prise l'un avec l'autre par emboitement et la partie de carter (41) et l'autre ensemble de carter (3, 42) étant serrés l'un contre l'autre en particulier le long de l'axe de montage (A).

3. Procédé selon la revendication 2, **caractérisé en ce que** la partie de carter (41) et l'autre ensemble de carter (3, 42) sont serrés l'un par rapport à l'autre dans une direction (a) qui présente une composante de direction transversale à l'axe de montage (A), en particulier perpendiculairement à l'axe de montage (A).

4. Procédé selon l'une quelconque des revendications précédentes, **caractérisé en ce qu'**une deuxième partie de carter (42) est utilisée comme autre ensemble de boîtier et les deux parties de carter (41, 42) sont fixées directement l'une sur l'autre.

5. Procédé selon l'une quelconque des revendications 1 à 3, **caractérisé en ce que** l'autre ensemble de carter (3) est reçu entre la partie de carter (41) et une seconde partie de carter (42), les deux parties de carter (41, 42) étant respectivement amenées en prise avec une face avant (35) de l'ensemble de carter (3) et étant fixées respectivement sur la face avant (35) associée par fusion de matière de la partie de carter (41, 42) et/ou de l'ensemble de carter (3) dans la zone de prise (45) de la partie de carter (41, 42) respective avec la face avant (35) associée de l'ensemble de carter (3), les deux parties de carter (41, 42) étant serrées l'une par rapport à l'autre, serrant ainsi au moins l'une des deux parties de carter (41, 42) également par rapport à l'autre ensemble de carter (3).

6. Procédé selon la revendication 5, **caractérisé en ce que** les deux parties de carter (41, 42) sont serrées l'une par rapport à l'autre le long de l'axe de montage (A) ou le long d'une direction (a) qui présente une composante de direction perpendiculaire à l'axe de montage (A), ou le long d'une direction s'étendant perpendiculairement à l'axe de montage (A).

7. Procédé selon l'une quelconque des revendications 2 à 6, **caractérisé en ce que** l'autre ensemble de carter (3) est formé par deux éléments de carter (31, 32) qui sont en regard l'un de l'autre perpendiculairement aux deux parties de carter (41, 42).

8. Procédé selon l'une quelconque des revendications précédentes, **caractérisé en ce qu'**une plaque de carter est utilisée pour l'au moins une partie de carter (41).

9. Procédé selon l'une quelconque des revendications précédentes, **caractérisé en ce que** lors de la fusion de matière dans la zone de prise (35, 45), l'au moins une partie de carter (41) réalise un mouvement d'affaissement (s) par rapport à l'autre ensemble de carter (3), le mouvement d'affaissement (s) étant réalisé en particulier en direction de la précontrainte élastique.

10. Procédé selon l'une quelconque des revendications précédentes, **caractérisé en ce que** la matière dans la zone de prise (35, 45) est fusionnée à l'aide d'un laser, des zones (41, 42) à ne pas être fusionnée du boîtier (3, 4) étant fabriquées en un matériau perméable au rayonnement laser utilisé.

11. Procédé selon l'une quelconque des revendications précédentes, **caractérisé en ce que** la durée du processus de fusion est commandée par un critère predéfinissable, la durée du processus de fusion étant commandée
- en fonction du mouvement d'affaissement (s) de l'au moins une partie de carter (41), en particulier en fonction de la vitesse et/ou de la dynamique du mouvement d'affaissement (s) ou en fonction de l'étendue du mouvement d'affaissement (s) ou
- en fonction de la modification de la force de réaction (F) lors du serrage de l'au moins une partie de carter (41) par rapport à l'autre ensemble de carter (3, 42),
la durée du processus de fusion étant de préférence fixée dès le début du processus de fusion.

12. Procédé selon l'une quelconque des revendications précédentes, **caractérisé en ce qu'**un espace libre (45a) est prévu dans la zone de prise (35, 45) de l'au moins une partie de carter (41) avec l'autre ensemble de carter (3), dans lequel espace libre du produit fondu (G) formé lors de la fusion de matière s'écoule, l'espace libre (45a) étant réalisé en particulier dans la zone d'emboitement (35, 45).

13. Procédé selon l'une quelconque des revendications précédentes, **caractérisé en ce que** la qualité de la liaison entre l'au moins une partie de carter (41) et l'autre ensemble de carter (3, 42) est vérifiée à l'aide de l'ampleur du mouvement de la partie de carter (41) par rapport à l'autre ensemble de carter (3, 42) pendant le processus de fusion.

14. Procédé selon la revendication 9, 10 et 13, **caractérisé en ce que** la puissance du laser est régulée en fonction de la vitesse du mouvement d'affaissement.
